# EUROPEAN PATENT SPECIFICATION

(11) **EP 1 808 267 B1**
(45) Date of publication and mention of the grant of the patent: **29.07.2009**
(21) Application number: 07000699.4
(22) Date of filing: 15.01.2007
(51) Int. Cl.: B23Q 39/02, B23Q 16/02

(54) **Tool turret**
Werkzeugrevolver
Tourelle porte-outil

(30) Priority: 17.01.2006 KR 20060004773
(43) Date of publication of application: 18.07.2007
(73) Proprietor: EWS Korea Co., Ltd., Changwon-city Kyoungnam-do (KR)
(72) Inventor: Park, Joong-han, Kimhae-city Kyoungnam-do (KR)
(74) Representative: HOFFMANN EITLE

(56) References cited:
- EP-A1- 0 661 133
- EP-A1- 0 841 121
- DE-A1- 4 235 095
- DE-A1- 19 838 505

## Description

### BACKGROUND OF THE INVENTION

### Field of the Invention

The present invention relates to a tool turret, and more particularly, to a tool turret that is provided with an eccentric housing disposed in a body in such a manner as to encompass the outer periphery of a gear shaft for transmitting power for exchange of a tool, so that as an eccentricity is adjusted by the eccentric housing, the distance between the gear shaft and a turning curvic coupling is regulated, thereby reducing noises therefrom; and with a timing belt disposed for connecting a motor pulley and the gear shaft, thereby absorbing distance variation values generated by the adjustment of eccentricity of the eccentric housing and at the same time removing the frictional noises due to the contact with gears to improve merchantability.

### Background of the Related Art

Generally, the tool turret is mounted on an automatic lathe or a machining center, and while in use, there are some problems in that first, big noises are generated at the time of cutting; second, as a disc is turned at a high speed so as to shorten a tool exchange time, many noises are caused at the time of exchanging the tool; and third, since the machining error of each part thereof is generated, the tool exchange is not conducted at an accurate position thereof, which makes the disc vibrated (fluctuated) at the time of clamping.

Further, during the assembling of the tool turret, a gear shaft is fixed on one side of a turret body, which makes it impossible to adjust the distance tolerance, such that a relatively long time is required for obtaining precision, and even though the gear shaft and the turning curvic coupling are held in position, an engagement ratio is not obtained desirably between a spur gear disposed around the gear shaft and a spur gear disposed around the outer periphery of the turning curvic coupling.
The DE 42 35 095 A1 relates to a tool turret focusing on the gear arrangement provided for the drive of tools. Theses tools have driven pinions at their free ends. Only that tool in operation position is driven. An intermediate shaft is mounted in a sleeve and has pinions with which the driven pinions of the tool spindles engage. The gear arrangement is such that the tool turret does not need to be displaced for a switching operation.

### SUMMARY OF THE INVENTION

Accordingly, the present invention has been made in view of the above-mentioned problems occurring in the prior art, and it is an object of the present invention to provide a tool turret that is provided with an eccentric housing adapted for encompassing the outer periphery of a gear shaft and for adjusting its eccentricity, thereby reducing the noises generated at the time of exchanging the tool, and with a timing pulley and a timing belt disposed for connecting a motor pulley and the gear shaft, thereby absorbing the distance variations generated by the adjustment of eccentricity of the eccentric housing.

It is another object of the present invention to provide a tool turret that is provided with an eccentric housing adjusting unit adapted for adjusting an eccentric housing, such that an eccentricity of the eccentric housing can be adjusted, and with a pair of bevel gears disposed integrally in a gear box for transmitting the power of a shaft to a drive shaft, such that the assembling of parts is easily carried out and the machining errors are also reduced, thereby ensuring the improvement of the quality of product.

To achieve the above objects, according to the present invention, there is provided a tool turret as defined in claim 1.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG.1 is an exemplary view showing a tool turret according to a first embodiment of the present invention;

FIG.2 is a view showing a configuration of a tool exchange driving unit of the tool turret according to the first embodiment of the present invention;

FIG.3 is an exemplary view showing an operating state of a proximity switch of the tool turret according to the first embodiment of the present invention;

FIG.4 is a partially enlarged view showing the tool turret according to the first embodiment of the present invention;

FIG.5 is a flow chart showing the operational procedure of the tool exchange of the tool turret according to the first embodiment of the present invention;

FIG.6 is a partially enlarged view showing the tool turret according to the first embodiment of the present invention;

FIG.7 is an exemplary view showing a tool turret according to a second embodiment of the present invention;

FIG.8 is a bottom view of FIG.7;

FIG.9 is a partially enlarged view showing the tool turret according to the second embodiment of the present invention; and

FIG.10 is an exemplary view showing the configuration of the gear box of the tool turret according to the second embodiment of the present invention.

### DETAILED DESCRIPTION OF THE PREFERRED EMBODIMENT

According to the present invention, there is provided a tool turret that has an eccentric housing disposed in a body in such a manner as to encompass the outer periphery of a gear shaft transmitting the power for exchange of a tool, whereby as the eccentricity is adjusted by the eccentric housing, the distance between the gear shaft and a turning curvic coupling is regulated, thereby resulting in the adjustment of back lash, the smoothness of movements, the reduction of noises, such that the productivity of the tool turret can be more improved.

Now, an explanation on a tool turret according to preferred embodiments of the present invention will be given in detail with reference to the attached drawings.

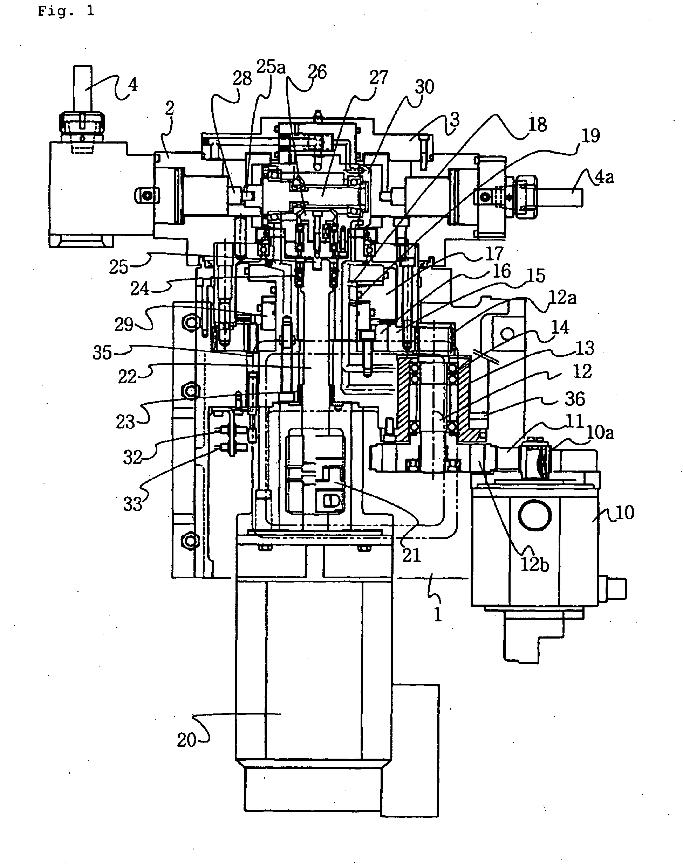

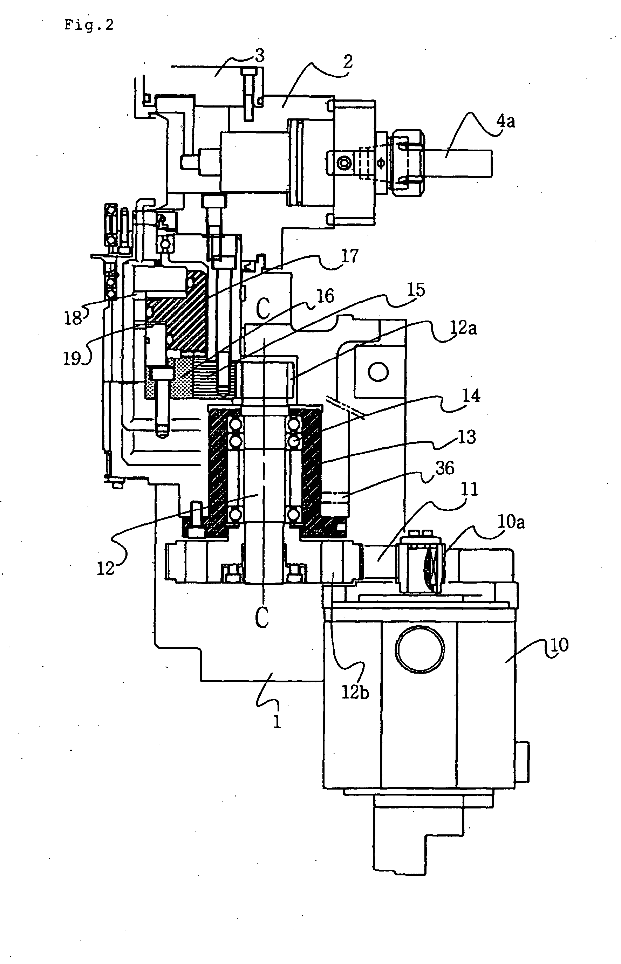

First, FIG.1 is an exemplary view showing a tool turret according to a first embodiment of the present invention, and FIG.2 is a view showing a configuration of a tool exchange driving unit of the tool turret according to the first embodiment of the present invention. According to the present invention, as shown, there is provided a tool turret which includes: a main motor 20 for driving turning tools 4 and 4a and a servo motor 10 for generating the power required for exchange of a tool,
characterized by comprising: a turning tool driving unit 40 including a shaft 22 rotatably coupled with the main motor 20 by means of a coupling 21, a body 1 disposed around the outer periphery of the shaft 22, a gear box 30 coupled with the shaft 22 by means of a key 25, a tool drive shaft 28 coupled to the gear box 30 by means of a key 25a, and the turning tools 4 and 4a driven by means of the tool drive shaft 28; and a tool exchange driving unit 50, the tool exchange driving unit including a motor pulley 10a disposed on a shaft of the servo motor 10, a gear shaft 12 coupled with the motor pulley 10a by means of a timing belt 11 for receiving the power of the servo motor 10 from the motor pulley 10a, an eccentric housing 13 disposed around the outer periphery of the gear shaft 12 and having one or more bearings 14 disposed around the gear shaft 12 in such a manner as to be eccentric by a given distance with respect to an absolute center line C, a spur gear 12a disposed around the outer periphery of one end portion of the gear shaft 12, a turning curvic coupling 15 adapted for receiving the turning power from the spur gear 12a, a fixed curvic coupling 16 adapted for restricting the rotation of the turning curvic coupling 15, and a piston curvic coupling 17 detachably mounted on the turning curvic coupling 15 and the fixed curvic coupling 16 for stopping the rotation of a disc 2 or for releasing stopping the rotation of the disc 2.

The main motor 20 is a motor for driving the turning tools 4 and 4a, and the servo motor 10 is a motor for exchange of a tool. Conventionally, the main motor 20 and the servo motor 10 are formed of a single body, but in the preferred embodiments of the present invention, they are employed as a separate part so as to overcome the conventional problems like the delay of working time and the difficulties of production caused when they are formed of a single body.

Referring to the driving process of the turning tool 4, the shaft 22 and the shaft of the main motor 20 are coupled by means of the coupling 21, and the coupling 21 has a hole 21a disposed along one side thereof, for operating a proximity switch 31, with a result that the turning position of the shaft 22 is adjusted. This will be in detail explained in the operation of the proximity switch 31 as will be discussed below.

The shaft 22 and the gear box 30 are coupled by means of the key 25, and if necessary, they are detached from each other. The gear box 30 has a drive shaft 27 with a key groove thereon, and the drive shaft 27 is rotated in engagement with the tool drive shaft 28 by means of a key 25a.

That is to say, the drive shaft 27 is rotated at its position by means of the bevel gears, but is not moved in the direction of the tool drive shaft 28, having the key groove formed only on one side thereof, such that it is rotated in engagement with any one of the tool drive shafts 28 disposed on the rear sides of the turning tools 4 and 4a (in the drawings, the turning tool 4 at the left side in FIG.1 becomes in the engagement with the tool drive shaft 28).

The turning tool driving unit 40 may have a pair of bevel gears at the inside thereof. In other words, if the tool drive shaft 28 and the shaft of each of the turning tools 4 and 4a are disposed on a linear line, the turning tool driving unit 40 does not need the pair of bevel gears, but if they are in a perpendicular relation with each other, it needs the pair of bevel gears.

Now, an explanation of an operation for exchange of a tool will be given.

The servo motor 10 rotates the disc 2 to left and right sides by a desired angle, and the motor pulley 10a is disposed around the shaft of the servo motor 10 and is coupled with the gear shaft 12 by means of the belt 11. The belt 11 is formed of a timing belt, which prevents slipping during driving and controls the servo motor 10 in an accurate manner.

Of course, general pulleys or belts may be adopted, but in this case, slipping is undesirably caused. Therefore, so as not to generate the slipping, it is desirable to adopt the combination of the motor pulley 10a and the timing belt 11 like the present invention or the combination of a sprocket and a chain.

The eccentric housing 13 is provided around the outer periphery of the gear shaft 12 for adjusting an eccentricity. The eccentric housing 13 is disposed eccentrically with respect to an absolute center line C in such a manner as to be adjusted in its position within the body 1. As the position of the eccentric housing 13 is adjusted, the distance between the gear shaft 12 and the turning curvic coupling 15 is regulated.

The eccentric housing 13 is first secured at a desirable given position within the body 1 and is then secured again by means of a set screw 36. So as to fix the position of the eccentric housing 13 in a more accurate manner, desirably, a cone-pointed set screw may be adopted therein. After the adjustment of the eccentricity, the eccentric housing 13 is fixed to the body 1 by means of a fastening bolt 227 disposed on the end portion thereof.

The gear shaft 12 has the spur gear 12a disposed along one end periphery thereof, and the spur gear 12a is rotated in engagement with the turning curvic coupling 15.

According to a main feature of the present invention, therefore, the eccentric housing 13 is adjusted in its position to regulate an engagement ratio between the spur gear 12a around the gear shaft 12 and the gear disposed around the outer periphery of the turning curvic coupling 15, thereby enabling the engagement ratio to be raised in a range where under-cut is not generated. This gives some advantages in that noises are reduced, the fluctuation of the disc is minimized according to the accurate division of the disc, the driving resistance is lowered to make the power from the gear shaft gently transmitted.

The turning curvic coupling 15 and the disc 2 are fixed to each other by means of a bolt, and thus, if the power of the gear shaft 12 is transmitted to the turning curvic coupling 15, the disc 2 is rotated to start exchange of a tool.

The piston curvic coupling 17 serves to control the operation of the turning curvic coupling 15, and at a state where the piston curvic coupling 17 is not assembled with the turning curvic coupling 15 and the fixed curvic coupling 16, that is, where the turning curvic coupling 15 is freely rotated, exchange of the tool is conducted. To the contrary, if the piston curvic coupling 17 is in the assembled relation with the turning curvic coupling 15 and the fixed curvic coupling 16, the disc 2 becomes in a fixed state.

Only when the disc 2 is rigidly fixed to the body 1, the rotation of the disc 2 caused by the cutting force at the time of cutting can be prevented.

Referring to the operation of the piston curvic coupling 17, if an oil pressure is applied to a first inlet port 18, the piston curvic coupling 17 is moved down in the direction of the drawing, that is, toward the fixed curvic coupling 16 and the turning curvic coupling 15, and is then in engagement with them, thereby making the turning curvic coupling 15 fixed. To the contrary, if the oil pressure is applied to a second inlet port 19, the piston curvic coupling 17 is moved up in the direction of the drawing to release the engaging relation with the turning curvic coupling 15. If released, the disc 2 can be rotated by the driving of the servo motor 10, but if the engaging relation is made again, the disc 2 is returned to its fixed state.

The piston curvic coupling 17 is coupled with a dog as will be mentioned below.

Next, an explanation on the operations of first to third proximity switches 31, 32, and 33 will be given.

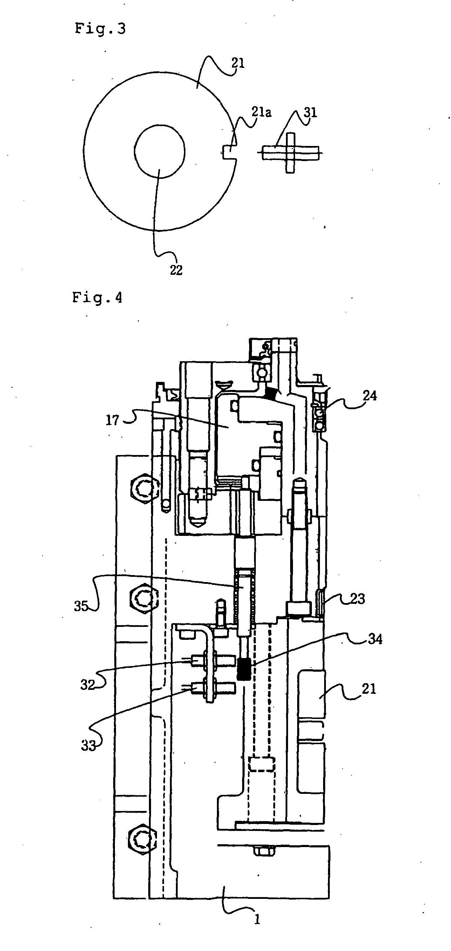

FIG.3 is an exemplary view showing an operating state of a proximity switch of the tool turret according to the first embodiment of the present invention, wherein the first proximity switch 31 is spaced apart from the side portion of the coupling 21, and the coupling 21 has the hole 21a formed around one side portion thereof, for transmitting a signal to the first proximity switch 31.

At the time of setting an initial position, first, if the first proximity switch 31 is turned on, that is, if an object is sensed through the first proximity switch 31, the position is adjusted again by means of the main motor 20. Thus, if the first proximity switch 31 is turned off, that is, if an object is not sensed by the hole 21a of the coupling 21, the initial position is set at this time.

If the disc 2 is rotated at the state where the initial position setting is not made, the key 25a of the tool drive shaft 28 coupled to the drive shaft 27 may be broken. Thus, the first proximity switch 31 senses the position of the hole 21a to check the position where the key 25a of the tool drive shaft 28 is rotated with no interference with the key groove of the drive shaft 27.

FIG.4 is a partially enlarged view showing the tool turret according to the first embodiment of the present invention, wherein the piston curvic coupling 17 and a dog 35 are configured to be engaged with each other and the dog 35 has a sensing member 34 disposed on one end thereof, the sensing member 34 having the second and third proximity switches 32 and 33 spaced apart from one side portion thereof.

If the oil pressure is applied to the first inlet port 18 to allow the piston curvic coupling 17 to become in engagement with the fixed curvic coupling 16 and the turning curvic coupling 15, the third proximity switch 33 is turned on, and to the contrary, if the piston curvic coupling 17 is not in engagement with the fixed curvic coupling 16 and the turning curvic coupling 15, the second proximity switch 32 is turned on (when an object is sensed to the proximity switch, the proximity switch is turned on).

Prior to the exchange of a tool, therefore, it should be first checked out that the first proximity switch 31 is turned off (at the state where the object is not sensed by the hole 21a), the second proximity switch 32 is turned on, and the third proximity switch 33 is turned off. If checked so, power source is applied to the servo motor 10 to rotate the gear shaft 12, thereby executing the exchange of a tool.

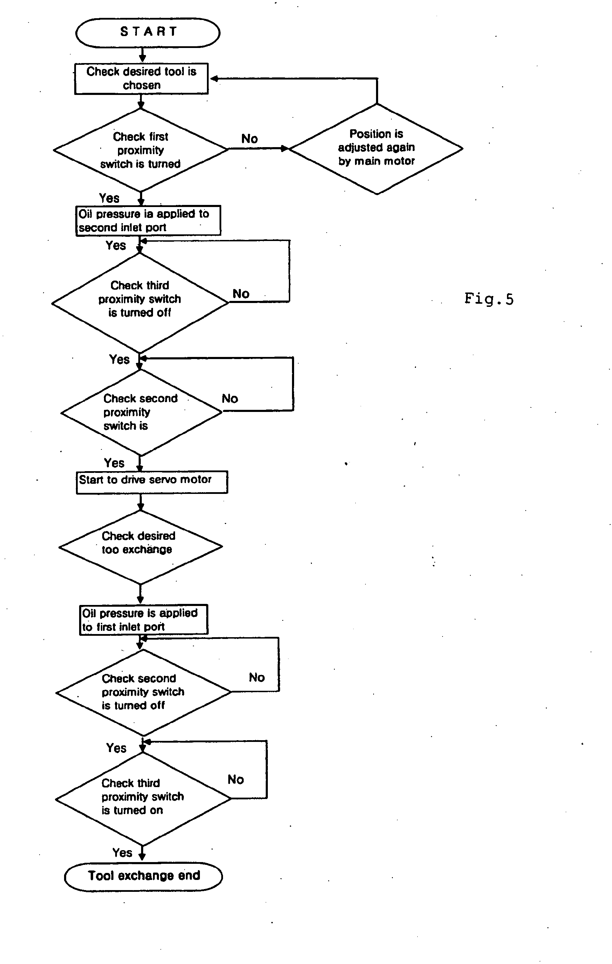

FIG.5 is a flow chart showing the operational procedure of the tool exchange of the tool turret according to the first embodiment of the present invention. As shown, after a command for choosing a desired tool is issued, it is checked whether an object is adjacent to the first proximity switch 31. If adjacent, the position of the shaft 22 is adjusted again by means of the main motor 20 until the first proximity switch 31 is turned off, that is, until the object is not sensed by the hole 21a of the coupling 21.

After that, if the oil pressure is applied to the second inlet port 19, the piston curvic coupling 17 is released from the engaged relation with the fixed curvic coupling 16 and the turning curvic coupling 15, and it is checked whether the sensing member 34 is sensed by the third proximity switch 33 and whether the sensing member 34 is sensed by the second proximity switch 32.

If the object is sensed by the second proximity switch 32, since it is checked that the engagement of the piston curvic coupling 17 with the fixed curvic coupling 16 and the turning curvic coupling 15 is released normally, the servo motor 10 is actuated to rotate the disc 2, thereby executing the exchange of a tool.

After that, if the oil pressure is applied to the first inlet port 18, it is checked that the second proximity switch 32 is turned off, but if it is checked that the third proximity switch 33 is turned on, the exchange of a tool is normally finished.

Next, cutting is executed through the turning tool 4, and after the cutting, the tool exchange operation as mentioned above is repeatedly carried out.

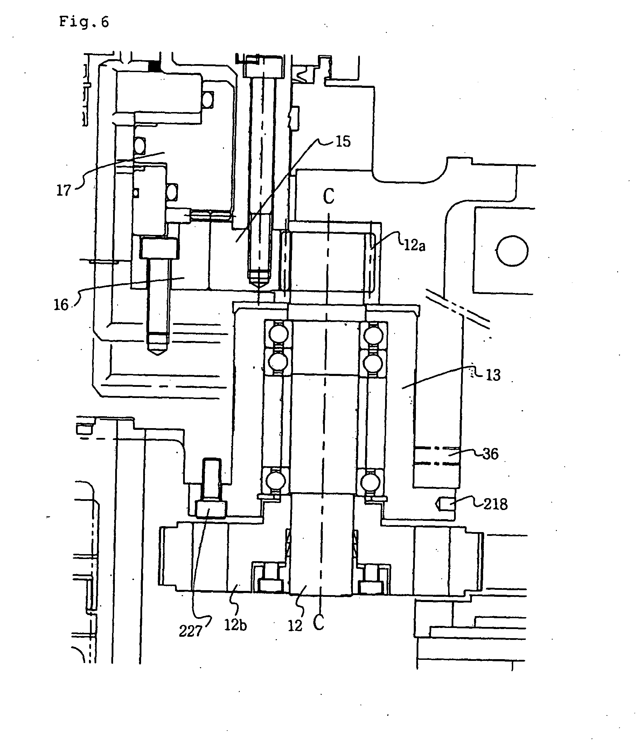

FIG.6 is a partially enlarged view showing the tool turret according to the first embodiment of the present invention, wherein a timing pulley 12b is disposed around the outer periphery of the gear shaft 12, for transmitting the power of the servo motor 10, and the spur gear 12a is disposed around one end periphery of the gear shaft 12. If the servo motor 10 is driven at a state where the spur gear 12a and the turning curvic coupling 15 are engaged with each other, the disc 2 is rotated to execute the exchange of a tool.

At this time, the spur gear 12a mounted around one end periphery of the gear shaft 12 is rotated in the engagement with a spur gear (which is not designated in the drawing) mounted around the outer periphery of the turning curvic coupling 15, and as the disc 2 is rotated at a relatively fast speed so as to shorten the time required for exchange of the tool, many noises are generated due to the frictions between the gears. To prevent the generation of noises, a good engagement ratio between the gears are needed. To obtain a good engagement ratio, there are needs for precise gear machining and distance adjustment between the spur gears upon assembling. If such the needs are satisfied, frictional noises are greatly reduced, and an optimal position of minimizing the loss caused upon the power transmission is found.

The eccentric housing 13 has a jig inserted through a side hole 218 formed on the side portion there, and after the jig has been inserted, the eccentric housing 13 is rotated to adjust the eccentricity thereof. After that, the eccentric housing 13 is fixed by means of the fastening bolt 227. Upon the assembling, the timing pulley 12b is rotated to adjust the distance between the spur gear 12a of the gear shaft 12 and the spur gear of the turning curvic coupling 15, but most of tool turrets have the body 1 closed on the side portion thereof, for preventing chips or cutting oil from entering thereinto.

Just for rotating the eccentric housing 13, however, the side portion of the body 1 is not cut off to form the side hole 218 thereon. Thus, there is a need for a structure where the eccentric housing 13 is rotated on the opened bottom surface side of the body 1, that is, on the timing pulley 12b side.

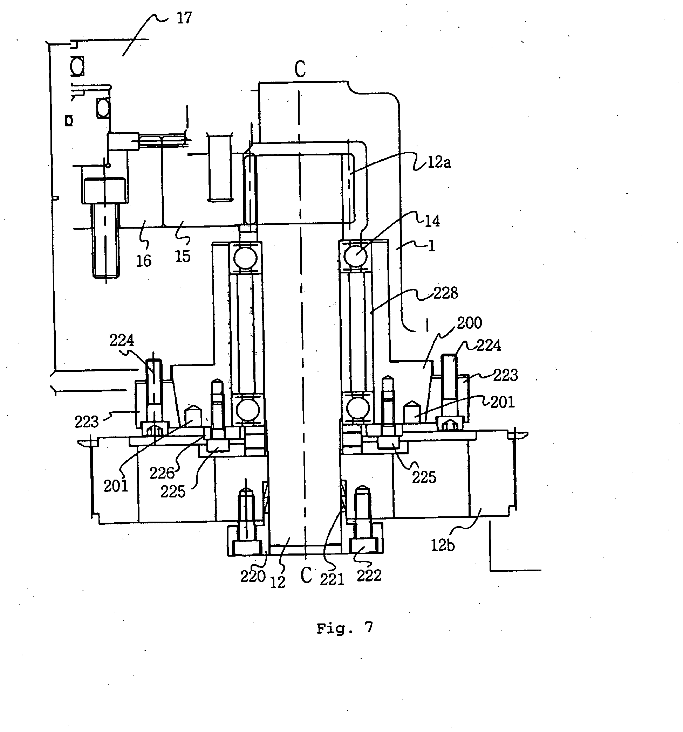

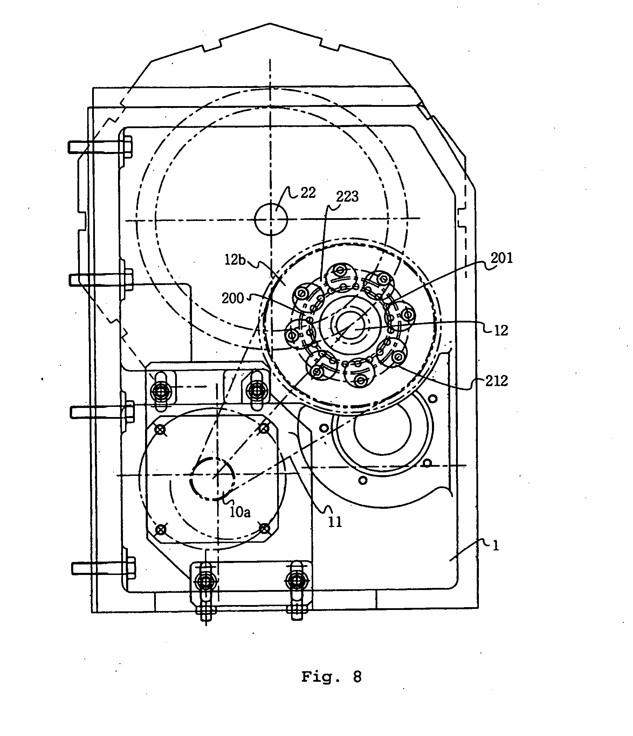

FIG.7 is an exemplary view showing a tool turret according to a second embodiment of the present invention, for the purpose of solving the above-mentioned problems in the first embodiment of the present invention, and FIG.8 is a bottom view of FIG.7. According to the second embodiment of the present invention, the tool turret includes: a cylindrical tapered eccentric housing 200 disposed eccentrically by a given distance with respect to an absolute center line C and having a plurality of adjusting holes 201 around the bottom periphery thereof; a gear shaft 12 disposed around the inner periphery of the tapered eccentric housing 200 for transmitting power of a servo motor 10; a timing pulley 12b disposed around the lower outer periphery of the gear shaft 12 and having a plurality of holes 212 formed around the bottom periphery thereof; and a retainer 220, a span ring 221, and a bolt 222 adapted for coupling the gear shaft 12 and the timing pulley 126, characterized in that an eccentric housing adjusting part is provided with a fixed block 223 coupled closely around the outer periphery of the tapered eccentric housing 200 and with a plurality of block-fastening bolt 224 for fixing the fixed block 223 to a body 1.

The timing pulley 12b has the plurality of holes 212 formed on the bottom periphery thereof, and a jig is fitted between the adjacent holes 212, such that the adjusting holes 201 of the tapered eccentric housing 200 are rotated, thereby rotating the tapered eccentric housing 200.

As the tapered eccentric housing 200 is rotated, the engagement between the spur gear 12a of the gear shaft 12 and the turning curvic coupling 15 is in a most proper position, such that the tapered eccentric housing 200 is disposed at a position where noises are greatly reduced and an engagement ratio between the gears become high. At this time, the fixed block 223 that is loosely (temporarily) coupled to the tapered eccentric housing 200 is fastened strongly again to the tapered eccentric housing 200 by means of the plurality of block-fastening bolts 224.

At this time, the fixed block 223 and the tapered eccentric housing 200 are disposed inclined to each other, such that they do not come into close contact with each other. Thus, if the block-fastening bolts 224 are fastened, the fixed block 223 is disposed around the tapered eccentric housing 200. If the block-fastening bolts 224 are fastened until the fixed block 223 does not advance anymore, in this case, the tapered eccentric housing 200 is fixed to the body 1.

Fastening bolts 225 and the retainer 226, as reference numerals which are not described above, serve to fixedly mount the bearing 15 and a collar 228 to the tapered eccentric housing 200.

The gear shaft 12 and the timing pulley 12b are coupled by means of the retainer 220, the span ring 221 and the bolts 222. In more detail, the gear shaft 12 is insertedly coupled to the tapered eccentric housing 200, and after the bolts 222 are inserted into the retainer 220, they are fixed to the timing pulley 12b. At this time, the retainer 220 pushes the span ring 221, and as it pushes against the retainer 220, thus, the span ring221 becomes extended outward because of the tapered outer periphery of the eccentric housing 200, such that the timing pulley 12b comes into close contact with the gear shaft 12.

Of course, the span ring 221 may be replaced with a key.

The distance between the gear shaft 12 and the turning curvic coupling 15 is varied by minute values through the adjustment of the tapered eccentric housing 200, and the distance variation is absorbed by means of the timing belt 11 disposed between the timing pulley 12b and the motor pulley 10a. In other words, the gear shaft 12, which is gear-coupled on one end thereof to the turning curvic coupling 15 and is coupled on the other end thereof to the timing pulley 12b, is rotated by means of the timing belt 11, such that the timing belt 11 serves to absorb the minute movements of the gear shaft 12.

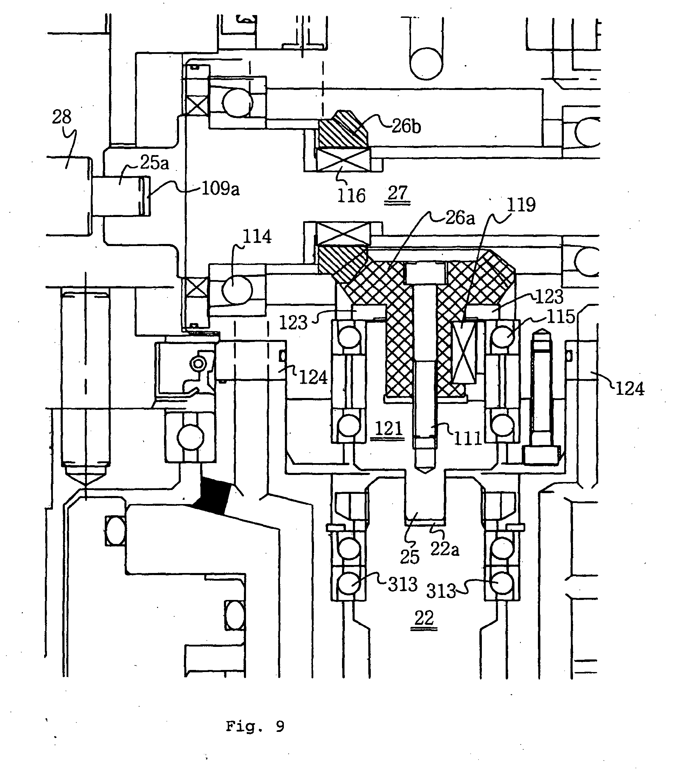

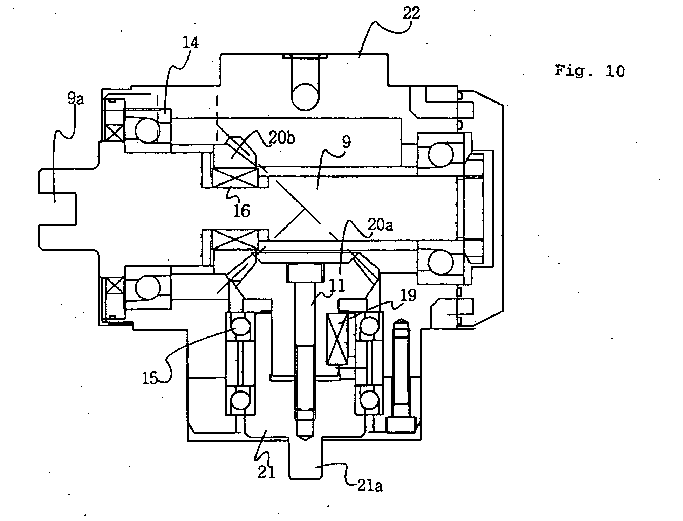

FIG.9 is a partially enlarged view showing the tool turret according to the second embodiment of the present invention, and FIG.10 is an exemplary view showing the gear box of the tool turret according to the second embodiment of the present invention. According to the present invention, the tool turret is provided with the main motor 20 for driving the turning tool 4, with the shaft 22 rotatably coupled to the main motor 20 by means of the coupling 21, and with the gear box 30 coupled to the shaft 22 by means of the key 25 for transmitting the power of the shaft 22 to the tool drive shaft 28.

The gear box 30 includes a socket 121 having the key 25 coupled with a key groove 22a of the shaft 22, a bevel gear 26a fixedly coupled to the socket 121 by means of a bolt 111, a bevel gear 26b engaged with the bevel gear 26a, the drive shaft 27 rotated by means of the bevel gear 26b, and a plurality of bearings 114 and 115 disposed around the outer peripheries of the bevel gears 26a and 26b and the drive shaft 27.

Reference numerals which are not described above are a first space 123, a second space 124, keys 116 and 119, and a key groove 109a.

The first space 123 is a part for adjusting the space between the bevel gears, and the second space 124 is a part for adjusting the eccentricity between the gear box 30 and the tool drive shaft 28, thereby making the central lines of the turning tools 4 and 4a mounted on the disc 2 confirm with the central line of the gear box 30.

That is to say, the first space 123 is varied in a thickness such that the space between the bevel gears is adjusted, and the second space 124 is adjusted in a thickness by means of grinding such that the eccentricity between the gear box 30 and the tool drive shaft 28 is adjusted.

The key 116 is a part for preventing slipping between the bevel gear 26b and the drive shaft 27, and the key 119 is between the bevel gear 26a and the socket 121.

According to the conventional tool turret, since the bevel gear is fixedly coupled around the shaft, it is difficult to adjust the space between the fixed bevel gear and the bevel gear to be engaged therewith, thereby generating lots of noises or severe back lash, and at the time of assembling, further, the space between the bevel gear fixed around the shaft and the bevel gear to be engaged therewith should be adjusted, thereby needing substantially long assembling period time.

According to the present invention, however, the pair of bevel gears 26a and 26b are first provided in the gear box 30 and at the state where the engagement between the bevel gears 26a and 26b is made well, they are fixedly coupled around the shaft 22, such that there is no need for the adjustment of the space between the bevel gears.

If there is a need for the adjustment of the eccentricity between the tool drive shaft 28 and the gear box 30, as mentioned above, the eccentricity can be adjusted by means of the second space 124 disposed at the outside of the gear box 30.

As set forth in the foregoing, according to the present invention, a tool turret is provided with an eccentric housing disposed in a body in such a manner as to encompass the outer periphery of a gear shaft transmitting power for exchange of a tool, so that as an eccentricity is adjusted by the eccentric housing, the distance between the gear shaft and a turning curvic coupling is regulated, thereby reducing noises therefrom, and with a timing belt disposed for connecting a motor pulley and the gear shaft, thereby absorbing distance variation values generated by the adjustment of eccentricity of the eccentric housing and at the same time removing the frictional noises caused due to the contact with gears.

Further, the tool turret of the present invention is provided with an eccentric housing adjusting unit adapted for adjusting the eccentricity of an eccentric housing, and with a pair of bevel gears disposed integrally in a gear box for transmitting the power of a gear shaft to a drive shaft, such that the assembling of parts is easily carried out and the machining errors are also reduced, thereby ensuring the improvement of the product in quality.

While the present invention has been described with reference to the particular illustrative embodiments, it is not to be restricted by the embodiments but only by the scope of the claims. It is to be appreciated that those skilled in the art can change or modify the embodiments without departing from the scope of the present invention as defined in the appended claims.

## Claims

1. A tool turret which includes a main motor (20) for driving turning tools (4,4a) and a servo motor (10) for generating the power required for exchange of a tool, **characterized by** comprising:
a turning tool driving unit (40) including a shaft (22) rotatably coupled with the main motor (20) by means of a coupling (21), a body (1) disposed around the outer periphery of the shaft (22), a gear box (30) coupled with the shaft (22) by means of a first key (25), a tool drive shaft (28) coupled to the gear box (30) by means of a second key (25a), and the turning tools (4,4a) driven by means of the tool drive shaft (28); and
a tool exchange driving unit (50) including a motor pulley (10a) disposed on a shaft of the servo motor (10), a gear shaft (12) coupled with the motor pulley (10a) by means of a timing belt for receiving the power of the servo motor (10), an eccentric housing (13) disposed around the outer periphery of the gear shaft (12) and having one or more bearings (14) disposed around the gear shaft (12) in such a manner as to be eccentric by a given distance with respect to an absolute center line (C), a spur gear (12a) disposed along the outer periphery of one end portion of the gear shaft (12), a turning curvic coupling (15) adapted to receive the turning power from the spur gear (12a), a fixed curvic coupling (16) adapted to restrict the rotation of the turning curvic coupling (15), and a piston curvic coupling (17) detachably mounted on the turning curvic coupling (15) and the fixed curvic coupling (16) for interfering the rotation of a disc (2) or for releasing the interference of the rotation of the disc (2).

2. The tool turret according to claim 1, wherein the eccentric housing (13) is disposed eccentrically with respect to the absolute center line (C) in such a manner as to be adjusted in a position within the body (1), thereby regulating the distance between the gear shaft (12) and the turning curvic coupling (15).

3. The tool turret according to claim 1 or 2, wherein the distance variation caused by the adjustment of eccentricity of the eccentric housing (13) is absorbed by means of the timing belt (11) disposed between the motor pulley (10a) and the gear shaft (12).

4. The tool turret according to claim 2 or 3, wherein after the eccentricity of the eccentric housing (13) is adjusted, the eccentric housing (13) is first fixed in the body (1) by means of a set screw (36) and then fixed to the body by means of a fastening bolt (227) disposed on the end portion thereof.

## Patentansprüche

1. Werkzeugrevolver, der einen Hauptmotor (20) zum Antreiben von Wechselwerkzeugen (4, 4a) und einen Servomotor (10) zum Erzeugen der Leistung, die zum Wechseln eines Werkzeugs benötigt wird, enthält, **dadurch gekennzeichnet, dass** dieser umfasst:
eine Wechselwerkzeugantriebseinheit (40), welche eine Welle (22), die mit dem Hauptmotor (20) mittels einer Kupplung (21) gekoppelt ist, einen Körper (1), der um den Außenumfang der Welle (22) angeordnet ist, eine Getriebebox (30), die mit der Welle (22) mittels einer ersten Passfeder (25) gekoppelt ist, eine Werkzeugantriebswelle (28), die mit der Getriebebox (30) mittels einer zweiten Passfeder (25a) gekoppelt ist, und die Wechselwerkzeuge (4, 4a) enthält, die mittels der Werkzeugantriebswelle (28) angetrieben werden; und
eine Werkzeugaustauschantriebseinheit (50), welche eine Motorrolle (10a), die auf einer Welle des Servomotors (10) angeordnet ist, eine Getriebewelle (12), die mit der Motorrolle (10a) mittels eines Antriebsriemens zum Empfangen der Leistung des Servomotors (10) gekoppelt ist, ein exzentrisches Gehäuse (13), das um den Außenumfang der Getriebewelle (12) angeordnet ist und ein oder mehrere Lager (14) aufweist, die um die Getriebewelle (12) auf eine solche Weise angeordnet sind, dass diese um einen gegebenen Abstand bezüglich einer absoluten Mittellinie (C) exzentrisch sind, ein Stirnrad (12a), das entlang des Außenumfangs eines Endabschnitts der Getriebewelle (12) angeordnet ist, eine geschweifte Wechselkupplung (15), die angepasst ist, um die Wechselleistung von dem Stirnrad (12a) zu empfangen, eine feste geschweifte Kupplung (16), die angepasst ist, um die Drehung der geschweiften Wechselkupplung (15) einzuschränken, und eine geschweifte Kolbenkupplung (17) enthält, die an der geschweiften Wechselkupplung (15) und der festen Wechselkupplung (16) zum Beeinflussen der Drehung einer Scheibe (2) oder zum Auflösen der Beeinflussung der Drehung der Scheibe (2) angebracht ist.

2. Werkzeugrevolver nach Anspruch 1, bei dem das exzentrische Gehäuse (13) auf eine solche Weise exzentrisch bezüglich der absoluten Zentrumslinie (C) angeordnet ist, dass dieses an eine Position in dem Körper (1) eingestellt ist, wodurch der Abstand zwischen der Getriebewelle (12) und der geschweiften Wechselkupplung (15) reguliert wird.

3. Werkzeugrevolver nach Anspruch 1 oder 2, bei dem die Abstandsschwankung, die durch die Einstellung der Exzentrizität des exzentrischen Gehäuses (13) verursacht wird, mittels des Antriebsriemens (11) absorbiert wird, der zwischen der Motorrolle (10a) und der Getriebewelle (12) angeordnet ist.

4. Werkzeugrevolver nach Anspruch 2 oder 3, bei dem, nachdem die Exzentrizität des exzentrischen Gehäuses (13) eingesellt ist, das exzentrische Gehäuse (13) zunächst in dem Körper (1) mittels eines Schraubensatzes (36) befestigt wird und anschließend mittels eines Befestigungsbolzens (227), der auf dem Endabschnitt davon angeordnet ist, befestig wird.

## Revendications

1. Tourelle porte-outil qui comprend un moteur principal (20) pour entraîner des outils tournants (4, 4a) et un servomoteur (10) pour générer la puissance nécessaire l'échange d'un outil, **caractérisée par** le fait de comprendre:
une unité d'entraînement (40) d'outil tournant comprenant un arbre (22) couplé de manière rotative au moteur principal (20) au moyen d'un accouplement (21), un corps (1) disposé autour de la périphérie extérieure de l'arbre (22), une boîte à engrenage (30) couplée à l'arbre (22) au moyen d'une première clavette (25), un arbre (28) d'entraînement d'outil couplé à la boîte à engrenage (30) au moyen d'une deuxième clavette (25a), et les outils tournants (4, 4a) entraînés au moyen de l'arbre (28) d'entraînement d'outil ; et
une unité d'entraînement (50) d'échange d'outil comprenant une poulie (10a) à moteur disposée sur un arbre du servomoteur (10), un arbre (12) de pignon couplé à la poulie (10a) à moteur au moyen d'une courroie de distribution pour recevoir la puissance du servomoteur (10), un boîtier excentrique (13) disposé autour de la périphérie extérieure de l'arbre (12) de pignon et ayant un ou plusieurs paliers (14) disposés autour de l'arbre (12) de pignon de manière à être excentrique par une distance donnée par rapport à une ligne centrale absolue (C), un engrenage cylindrique (12a) disposé le long de la périphérie extérieure d'une partie d'extrémité de l'arbre (12) de pignon, un accouplement tournant (15) à denture trapézoïdale adapté pour recevoir la puissance de rotation de l'engrenage cylindrique (12a), un accouplement fixe (16) à denture trapézoïdale adapté pour limiter la rotation de l'accouplement tournant (15) à denture trapézoïdale, et un accouplement (17) à denture trapézoïdale à piston monté de manière amovible sur l'accouplement tournant (15) à denture trapézoïdale et l'accouplement fixe (16) à denture trapézoïdale pour perturber la rotation d'un disque (2) ou arrêter la perturbation de la rotation du disque (2).

2. Tourelle porte-outil selon la revendication 1, dans laquelle le boîtier excentrique (13) est disposé de manière excentrique par rapport à la ligne centrale absolue (C) de façon à être ajusté dans une position à l'intérieur du corps (1), régulant ainsi la distance entre l'arbre (12) de pignon et l'accouplement tournant (15) à denture trapézoïdale.

3. Tourelle porte-outil selon la revendication 1 ou 2, dans laquelle la variation de distance provoquée par l'ajustement de l'excentricité du boîtier excentrique (13) est absorbée au moyen de la courroie de distribution (11) disposée entre la poulie (10a) à moteur et l'arbre (12) de pignon.

4. Tourelle porte-outil selon la revendication 2. ou 3, dans laquelle après l'ajustement de l'excentricité du boîtier excentrique (13), le boîtier excentrique (13) est d'abord fixé dans le corps (1) au moyen d'une vis de pression (36) et ensuite fixé au corps au moyen d'un boulon de fixation (227) disposé sur sa partie d'extrémité.
